# EUROPEAN PATENT SPECIFICATION

(11) **EP 1 720 652 B1**
(45) Date of publication and mention of the grant of the patent: **24.10.2007**
(21) Application number: 05710938.1
(22) Date of filing: 03.02.2005
(51) Int. Cl.: B01J 20/06, B01J 20/32, B01D 15/00, C02F 1/28

(54) **A PROCESS FOR PREPARING COATED PARTICULATE SUPPORT MEDIA**
VERFAHREN ZUR HERSTELLUNG VON BESCHICHTETEN PARTIKELTRÄGERMEDIEN
PROCÉDÉ DE PRÉPARATION DE MILIEU SUPPORT PARTICULAIRE RÉVÉTU

(30) Priority: 04.02.2004 NO 20040526
(43) Date of publication of application: 15.11.2006
(73) Proprietor: North Cape Minerals AS, 6146 Aheim (NO)
(72) Inventor: KLEIV, Rolf Arne, N-7033 Trondheim (NO); REKKEDAL, Jermund, N-6146 Aheim (NO); SLAGNES, Steinar, N-6146 Aheim (NO)
(74) Representative: Marchant, James Ian
(86) International application number: PCT/NO2005/000039
(87) International publication number: WO 2005/075067

(56) References cited:
- US-A- 5 911 882
- US-A- 6 113 792
- US-B1- 6 468 942
- US-B1- 6 770 205

## Description

### 2. Field of the Invention.

The present invention comprises a coated particulate support material, process for preparing the material and use thereof.

### 3. Background of the invention (Prior Art)

The potential advantages of water treatment based on the utilisation of iron(III) oxides in a granular form have been recognised for many years. Filter beds based on such a material could be used to remove both soluble and particulate contaminants from water. This is possible when the huge surface area and the favourable chemistry of the iron(III) oxide phases are combined with the good hydraulic conductivity that is achieved when the material is present in a granular form. A number of methods for the preparation of various iron oxide coated granular media have been described, but when it comes to preparing a media that is able to remove significant amounts of natural organic matter (NOM), only two of these methods have achieved promising results.

The first method, which will be referred to as *the Paste Method,* is described by Li (1993) and later patented by Benjamin et al., US 5,911,882. This patent describes how an adsorbent medium useful for reversibly adsorbing natural organic matter and for filtering particulate matter from water is produced by a method that includes the steps of preparing an aqueous solution containing ferric iron and hydroxyl ion, heating the solution to provide a paste, contacting the paste with a support material to provide a mixture, and drying the mixture.

According to the second method, which is given by McMeen & Benjamin (1997) and will be referred to as *the Direct Mixing Method,* the adsorbent medium is prepared by simultaneously mixing the support material with two different solutions, one containing ferric iron and the other containing the hydroxyl ion. The mixture is then heated to dryness.

Both the Paste Method and the simpler Direct Mixing Method will produce a coating on the surface of the support material. The coating will usually consist of both iron(III) oxide and iron(III) hydroxide species, although the oxide form will dominate. It is therefore customary to refer to the coated support materials as iron oxide coated materials.

Both the Paste Method and the Direct Mixing Method can be used to prepare adsorbent media based on a variety of different granular support media. However, as shown by Li (1993), the use of olivine sand offers two main advantages. Firstly, the negative correlation between pH and NOM adsorption has been found to be less pronounced for olivine based adsorbent media compared to media based on natural sand. Secondly, the iron oxide coating tends adhere more strongly to the olivine surface, thus creating a more mechanically stable product. Iron(III) oxide coated olivine (IOCO) is therefore superior to iron oxide coated sand (IOCS).

Jonsson (2003) conducted a comprehensive evaluation of the NOM removal capacity for IOCO prepared by the Paste Method and the Direct Mixing Method, based on both extensive material characterisation and batch adsorption experiments.

In accordance with the procedures given by Li (1993) and Benjamin et al. (US 5,911,882), Jonsson (2003) used the following recipe (Table 1) when preparing the IOCO materials.

**Table 1. IOCO recipe used by Jonsson (2003)**

| Substance | Quantity |
|---|---|
| Olivine sand (0.2-1mm) | 1000.0 g |
| 2.1 M FeCl₃ | 660.8 ml |
| 10M NaOH | 346.9 ml |

This resulted in an initial molar ratio of hydroxyl ions to iron(III) of approximately 2.5, whereas the theoretical weight ratio of added iron(III) to support material equalled 0.0775.

Jonsson (2003) prepared the 2.1M iron(III) solution by dissolving iron(III) chloride hexahydrate in water. The Paste Method IOCO was prepared by employing three successive coating or contacting steps. A single contacting step was used when preparing the Direct Mixing Method IOCO. The specific surface area of the Paste Method IOCO varied from 4.1 m²/g to 6.4m²/g, whereas the respective value for the Direct Mixing Method IOCO was found to be 5.9. These results are in line with previously reported values up to 7.2m²/g (Li 1993; Chang, Li & Benjamin 1997; McMeen & Benjamin 1997).

As a result of his work, Jonsson (2003) demonstrated that IOCO prepared according to the Paste Method is superior to the adsorbent medium produced according to the Direct Mixing Method with respect to the ability to remove NOM as well as the mechanical stability of the materials. As demonstrated by a series of controlled batch adsorption experiments, the Paste Method IOCO was able to remove 40-60% of the NOM initially present at pH 7.0 and 8°C, whereas the respective removal for the Direct Mixing Method IOCO was found to be 10-20%. When using Direct Mixing Method IOCO in slow sand filters at water temperatures between 2°C and 21°C, McMeen & Benjamin (1997) achieved a NOM removal of 32-53% with the higher values corresponding to the highest temperatures. However, as pointed out by McMeen & Benjamin (1997), the mechanical stability of the material was low and a significant amount of the coating was washed off the support media during the initial phase of operation. Consequently, the Paste Method is recognised as the only method capable of producing a relatively stable IOCO with a high NOM removal capacity.

### Embodiment of the Paste Method

The Paste Method given by Li (1993) and Benjamin et al. (1999) (i.e. US Patent 5,911,882) has not been implemented at an industrial scale. The following paragraphs give a summary of the Paste Method and discuss the practical implications of basing an industrial process on this specific method.

US patent 5,911,882 states that the aqueous solution containing ferric iron and hydroxyl ion could be produced by mixing an aqueous solution of ferric chloride with any common base. The base should be added in an amount that provides a ratio of approximately 2.0 to 2.5 moles hydroxyl ion per mole of iron(III). After the solution is formed it is heated to evaporate water and provide a paste. Heating should be continued until the water content is approximately 45-55% by weight.

The paste is then contacted with the support material which must have a relatively narrow size distribution, typically 0.2-1mm. A variety of support materials could be used, but, as previously explained, the use of olivine is advantageous (i.e. the production of IOCO rather than IOCS).

As stated in US patent 5,911,882 the ratio of paste to support material will depend on both the support material and the water content of the paste. Contacting the support material with the paste should then be facilitated by mixing so that the individual particles are evenly coated. After the contacting step, the mixture is dried by heating it in an oven, or by using microwave radiation. The contacting and drying steps can be repeated using particles from the first drying step as the support material in subsequent contacting steps in order to obtain a thicker layer of iron(III) oxide on the support material.

In practice, considering the probable production volumes, a sodium hydroxide solution represents the only realistic alternative for the required base. Mixing the sodium hydroxide and iron(III) chloride solutions will result in spontaneous formation of solid iron(III) hydroxide, thus creating a suspension. The mixing and reaction could take place in an agitated reaction tank, or by using a mixer prior to transferring the mixture to a tank were the reaction is allowed to reach completion. When using the recipe given by Jonsson (2003) (Table 1), the water content of the suspension will be close to 70% by weight.

As subsequent heating in order to evaporate water requires substantial amounts of energy, one would prefer the water content of the chemicals used to provide the suspension to be as low as possible. However, water is needed as a solvent in order to facilitate the reaction between the ferric iron and the hydroxyl ions. In addition, it is difficult to reduce the water content of the ferric chloride solution used by Jonsson (2003) as the concentration is close to saturation.

The heating of the iron(III) hydroxide suspension in order to evaporate water and produce a paste with a water content of 45-55% is a very time consuming process as the water has to evaporate from the interface between the paste and the surrounding atmosphere. The procedure given by Jonsson (2003) utilises an oven operated at 110°C. The suspension is poured into a baking dish in which it should form a 2cm deep layer. The suspension is then dried for 14 hours. In order to produce the amount of paste needed for 1000kg of olivine sand when utilising an available oven area of 1m², such a procedure will require more than 600 hours of drying. Alternatively, for the drying to be completed within an hour, more than 600m² is required. Although it might be possible to utilise more efficient equipment on an industrial scale, these simple calculations still indicate that the production of paste will occupy extensive areas and volumes in an IOCO production plant.

When applying the procedure given by Jonsson (2003), it is not possible to add all the paste in one contacting step as this would result in segregation of the sand/paste mixture. According to Jonsson (2003), approximately 1/3 of the total required amount should be added in each step, thus resulting in one initial contacting step followed by two subsequent ones. After each contacting step the material must be dried.

After the mixing of support material and paste, the coated material is heated to dryness in order to produce a stable fixated coating. Jonsson (2003) achieved this by drying the mixture for 20 hours at 110°C using an oven. After the drying process the individual particles will adhere to each other and must be liberated prior to use. This was achieved by gentle mixing. At an industrial scale, a variety of mixers or tumbler could be used to achieve liberation. As the liberation process will generate a significant amount of dust, a suitable dust collecting system is required. The collected dust could probably be recycled.

The last step of an industrial process based on the Paste Method could involve washing the IOCO to reduce the amount of sodium chloride (NaCl) in the material and remove additional dust if this is required by the end-user.

### Insufficiencies of the Paste Method and the Direct Mixing Methods

A number of different methods for coating of solid particles has been developed and patented (e.g. US Patents 5096744, 6179916B1 and 3141792). These methods have been developed to coat a variety of solid particles, spanning from sand to dry fodder and pharmaceutical tablets, and their principal aim is to cover the solid core of the support material with a given amount of an evenly distributed and mechanically stable coating. In order to achieve this, a variety of different mixers and driers have been developed, some of which could be utilised in the production of IOCO. However, since numerous different iron oxides could be formed during the process, representing a range of different surface sites, the quality of the IOCO product depends on more than the mechanical properties of the coating and the ratio between iron oxide coating and support material. Consequently, the production of IOCO encompasses aspects not encountered in a mere coating process. At the present time, the Paste Method (US Patent 5,911,882) represents the state of the art in the production of high quality IOCO. The paste production step is seen as a necessity in order to achieve the required combination of high adsorption capacity and good mechanical stability, since all the attempts to produce IOCO through a more direct route (e.g. McMeen & Benjamin (1997); Benjamin et al. (1999)) have resulted in significantly inferior products.

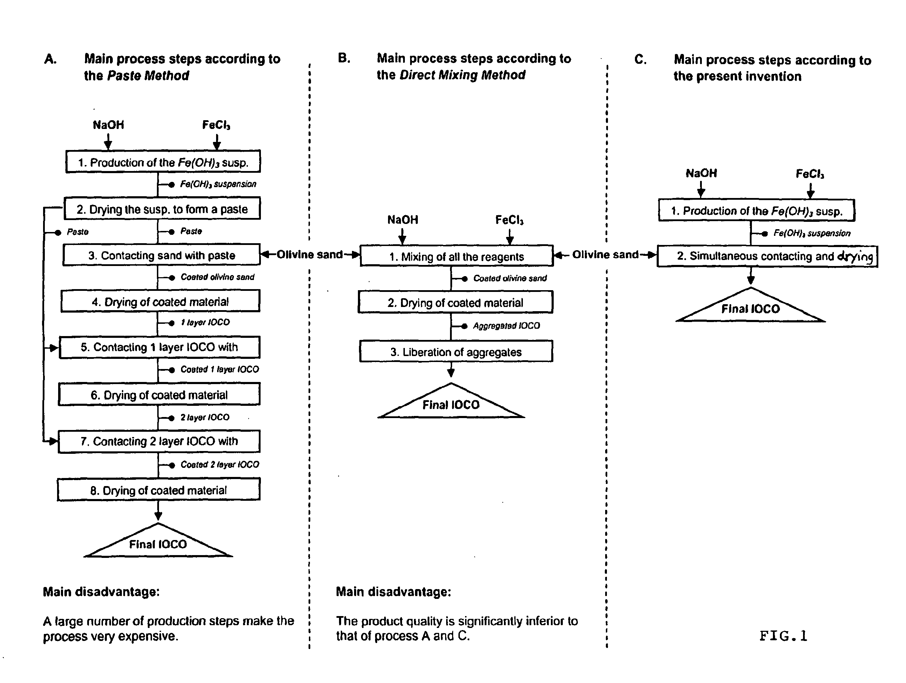

As discussed in the previous paragraphs and illustrated in fig. 1, basing an industrial process on the Paste Method described in US Patent 5,911,882 would involve a large number of different process steps and a considerable amount of handling. This is due to the fact that several contacting steps are required in order to obtain a satisfactory amount of iron oxide coating, and that the individual particles of the dried material must be liberated and classified after each step. In addition, drying the coated support material according to the procedure given by Jonsson (2003) will require a very large drying capacity if the batch times are to be kept at a reasonable level. In conclusion, basing an industrial process on the Paste Method described in US Patent 5,911,882 would require huge investments in process equipment and production capital. Hence, an industrial scale Pasta Method does not represent an economically feasible solution.

The Direct Mixing Method of McMeen & Benjamin (1997) represents an attempt to produce iron oxide coated support media with a simpler alternative to the cumbersome Paste Method. Although the production of IOCO is achieved it is important to note that a substantial amount of iron oxide is lost in the pore voids between the support particles since the reaction takes place directly in the suspension. As a consequence, an industrial process based on the Direct Mixing Method must also incorporate an iron(III) oxide recycling step in order to minimize the consumption of chemicals. This will both complicate the process and increase the operation costs. However, the main insufficiency of the Direct Mixing Method lies in the quality of the final product. The NOM removal capacity is generally lower than that of Pasta Method IOCO and the low mechanical stability of the product results in an unacceptable loss of coating.

### 4. Summary of the invention.

Consequently, it is the object of the present invention to provide a simplified method for the preparation of iron(III) oxide coated support media of a better quality (with respect to both NOM removal and mechanical stability), compared with the currently available processes and products. In the present invention the paste production step can be omitted and high quality IOCO can be produced by employing mixing and simultaneously drying. This discovery will result in a significantly cheaper production process.

The process of the present invention surprisingly provides a product which has significantly better performance that the products known from the prior art.

The preset invention comprises a process for preparing a coated particulate support material which comprises the steps of
(a) preparing an iron(III)hydroxide suspension; and adding said suspension to a particulate support material; and
(b) mixing and simultaneously drying of the iron(III)hydroxide suspension and the support material; until a stable coating is obtained. Optional further dewatering and drying can also be performed if requested. The coated,particulate material is iron oxide coated sand, and the particulate support material is oxide, carbonate and/or silicate minerals, hydroxide and polymer, preferably olivine, serpentine and/or pyroxene. Further, the iron(III)hydroxide suspension is gradually mixed with the support material. The ratio of iron(III) : support material is in the range of 0,02 - 0,2 in the present invention and the product temperature is 40 - 250 °C.

The present invention also comprises coated particulate support material in which it comprises:
(a) preparing an iron(III)hydroxide suspension;
(b) mixing the iron(III)hydroxide suspension with the support material and simultaneously drying the resulting mixture using combined mixing/drying equipment; until a stable coating is obtained.

The present invention also comprises the use of particulate support material for removal of natural organic material, heavy metals and/or phosphate from water in which the particulate support material is iron oxide coated sand. Iron oxide coated support materials (e.g. IOCO) may lend itself to a number of different uses. As an adsorbent media, the product could in principle be used to retain any substances with an affinity for the iron oxide surface. The adsorption capacity could be utilised in treatment of waste water from a number of sources, including both municipal and industrial waste water as well as polluted drainage from mines, landfills and waste deposits. Iron oxide coated materials could also be used to retain substances from the gas phase, e.g. as a filter media for rinsing polluted gas emissions from industrial processes and incineration plant.

The present invention comprises any process in which iron oxide coated support materials produced is used to retain or fixate specific substances from a gas or a fluid.

### 5. Detailed description of the invention.

The new and improved method for the production of IOCO is based on the procedure given by US patent 5,911,882. The procedure for the production of the initial iron(III) hydroxide suspension is identical and can be implemented as previously described, using the same recipe and the same equipment. However, after the suspension has been formed, the new method differs significantly from the procedure given by US patent 5,911,882.

According to A/S Olivin's new and improved method the iron(III) hydroxide suspension is not heated in order to evaporate water and produce a paste prior to the contacting step, but pumped directly into a combined mixer/dryer. Here, it is instantly contacted with the support material, which is kept in suspension by the action of the mixer. At the same time, the suspended mixture is dried by evaporating water to provide a stable coating on the individual particles. The drying is achieved by blowing hot air through the mixer.

As explained in the previous paragraph, the practical implementation of the new method requires the use of a combined mixer/dryer. Here several producers and suppliers could be used, e.g. Forberg, Eirich and Webac combined dryer/mixer.

The iron(III) hydroxide suspension is prepared according to the same method as US 5,911,882. After the suspension has been formed it could be allowed to settle in the mixing tank or in a separate settling tank so that clear water could be pumped off from the top of the tank. This will reduce the water content of the suspension and increase its viscosity, thus turning it into a slurry. However, this is important to stress that this is not in any way a requirement, as the original suspension could be pumped into the combined mixer/dryer without any further treatment. Reducing the water content of the suspension prior to its introduction to the mixer would however reduce both the time and the amount of energy necessary for the combined contacting/drying process. When using the recipe given Jonsson (2003) (Table 1) the water content of the initial iron(ill) hydroxide suspension will be close to 70%. Tests conducted by A/S Olivin showed that some 100 litres of water pr 500 kg support material could be pumped off from the mixing tank within 20 min after such a suspension had been formed, thus resulting in a water content of approximately 63-65%. One should note that a lower practical limit exists, since a certain water content is required to prevent the viscosity from being too high and result in poor mixing and coating properties. However, no such problems were faced when using a suspension/slurry with a water content of 63%.

The combined mixer/dryer could consist of a closed drying chamber equipped with rotating paddles designed to keep the bulk of the support material in suspension. The drying chamber must also be equipped with openings to allow feed of support material and retrieval of the final product. These openings must be closed during the mixing/drying operation. Hot air must be supplied through an air vent so that it can heat the mixture inside the drying chamber, and the resulting moist and cooler air must be allowed to escape through a similar system. Finally, the iron(III) hydroxide suspension must be pumped into the drying chamber through one or more nozzles or openings. To minimize the risk of segregation, these should not be placed below the paddle shafts. The suspension could be pumped directly from the mixing or settling tank using a suitable pump, e.g. a centrifugal pump or a displacement pump. Due to the corrosive nature of the iron(III) hydroxide suspension, acid proof materials should be used in the process equipment like mixing and settling tanks, pumps, valves and pipes as well as in the paddles and the drying chamber itself.

The optimal ratio between the weight of the material in the combined mixer/dryer and the volume of its chamber will depend on the actual design of the equipment and the power it can deliver. The paddles should be able to lift and suspend the material without crushing the individual particles or preventing the iron(III)hydroxide from accumulating on their surfaces. Test conducted by A/S Olivin showed that when using a combined mixer/dryer which had a nominal drying chamber volume of 5001, a total of 500kg of particulate support material per batch produced a good result. The quality of the final product did not change much when using a total of 750kg of particulate support material per batch, but it resulted in a significant and audible stress on the equipment and pushed it to the edge of its capability.

The flow rate of hot air is limited by the size and density of the solid particles. A higher rate will evaporate water more efficiently, but too high a rate could lead to a loss of material. This caused the final product to be virtually free from dust, whereas the loss of particulate support material was negligible. The moist exhaust from the mixer could be lead to a heat exchanger/condenser and a filter unit. This would facilitate the recovery of both dust and energy. The iron(III) hydroxide containing dust could probably be mixed with the initial iron(III) hydroxide suspension before it is pumped to the combined mixer/dryer. Dust recovery could be achieved using a conventional bag filter as long as it can cope with the elevated temperature of the material.

The feed rate of the iron(III) hydroxide suspension is limited by the risk of segregation and caking. If the total water content of the material in the combined mixer/dryer becomes too high, the material will lump together and cakes are formed on the paddles and on the inner walls of the drying chamber. This will increase the energy consumption and drying time significantly and cause lumps in the final product. Again, the optimal ratio will depend on the actual design and of the equipment. Test conducted by A/S Olivin with a combined mixer/dryer showed that instantly adding 2/9 of the total amount of suspension in one single step caused segregation and caking and slowed down the process. By visually inspecting the mixture in the combined mixer/dryer through an inspection hatch it was possible to determine the maximum additional of suspension in one single step and when the mixture was dry enough to receive another addition. It was found that when the total amount of suspension was added in equal portions over 9 separate steps and allowed to reach a certain dryness between each addition, segregation and caking was no longer a problem. The combined mixer/dryer was equipped by a humidity meter that monitored the relative humidity of the exhaust leaving the drying chamber. By comparing the humidity readings with the visual observations it was possible to use exhaust humidity as the control variable. When 1/10 of the total amount of suspension was pumped into the drying chamber in less than 3 min, the peak exhaust humidity rose to 27-42% at an exhaust temperature of 70 - 90°C, The mixture was then dried until the humidity reached 20% and a new portion of iron(III) hydroxide suspension was pumped into the drying chamber. In a fully developed industrial process the suspension could be added step by step or continuously at a rate controlled by the exhaust humidity or at pre-set intervals.

The air that is blown into the combined mixer/dryer must be heated to the desired temperature by aid of a heating unit. This unit could be powered by an electrical element or a gas or oil burner. The resulting air temperature should be quite high to facilitate efficient drying, thereby keeping the drying chamber residence time of the material as low as possible. In practice, the temperature will probably be limited by the power that can be delivered from the heating unit or the temperature tolerance of the equipment. After all the iron(III) hydroxide has been pumped into the combined mixer/dryer it could be necessary to continue the drying until the relative humidity of the exhaust is close to 0. Although the material could appear to be dry at higher humidity values, additional drying could be necessary to fixate the iron(III)hydroxide coating. Tests conducted by A/S Olivin using a combined mixer/dryer showed that products that had been produced by stepwise additions of suspension followed by stepwise drying down to 20% relative humidity was of an inferior quality since the coating was washed off when the materials were rinsed in water. However, additional drying of the same materials down to 2% relative humidity resulted in products with stable coatings.

The previous paragraphs can be summarized by the following process:
preparation of an iron(III) hydroxide suspension, and filling the combined mixer/dryer with the support material. Further, start the mixing /drying process and pump the iron(III)hydroxide suspension into the combined mixer/dryer, as a continuous or stepwise operation, but at a limited and controlled rate to avoid segregation and caking. When the desired amount of suspension has been added, continue to simultaneously mix and dry the material until a stable coating is obtained.

As with the Pasta Method, it might be necessary to wash the IOCO in order to reduce the amount of sodium chloride (NaCl) in the material and to remove additional dust if this is required by the end-user.

### 6. Brief description of the drawings.

The present invention compared to the Paste Method and the Direct Mixing Method is illustrated in figure 1. From this figure it is obvious that the present invention is a simplified method for the preparation of iron(III) oxide coated support material
Figur 2 is a flowsheet illustrating the present invention
Figur 3 shows NOM adsorption as a function of pH for the IOCO modifications described in Table 2. The 'Lovön' product was produced according to Paste Method (Benjamin et al. 1999) and serves as reference material.

### 7. Technical description of embodiments of the invention.

### Experiments showing the effect obtained by the new method

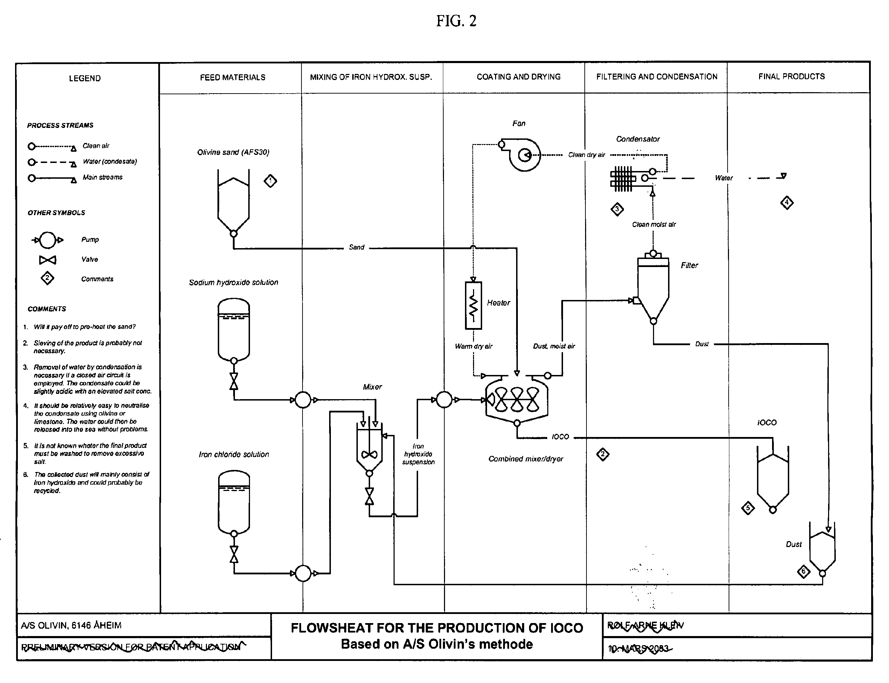

A/S Olivin has conducted a series of pilot scale IOCO production tests using a *FT-500* combined mixer/dryer from *Forberg* A/S. A flowsheet of the process is shown in fig. 2. The *Forberg FT-500* consists of a closed drying chamber equipped with two sets of paddles. These are mounted on two parallel shafts or axels that rotate in opposite directions, thus lifting the material up between the shafts and towards the centre of the drying chamber. The drying chamber is equipped with openings to allow feed of support material and retrieval of the final product. Heated air is supplied through an air vent, and the resulting moist and cooler air is allowed to escape through a similar system. The iron(III) hydroxide suspension can be pumped into the drying chamber through one or more nozzles. The *Forberg FT-500* is equipped by a humidity meter for monitoring of the relative humidity of the exhaust leaving the drying chamber.

The bulk of the various IOCO modifications were produced in batches based on 500kg of AFS30 olivine sand as a support material. The olivine sand has a grain size of 0,2 - 1,0 mm.

The same suspension recipe was used for all the experiments. The amount of suspension required per batch, based on 500 kg AFS30 as support material, was prepared by mixing 484.4 litres of an aqueous ferric iron chloride solution containing 160g iron(III) per litre (i.e. 2.86M) with 420.5 litres of an aqueous sodium chloride solution containing 330g of NaOH per litre (i.e. 8.25M). This resulted in an initial molar ratio of hydroxyl ions to iron(III) of approximately 2.5 and a water content of approximately 70%. The suspensions were prepared simply by adding the sodium hydroxide solution to a plastic tank containing the iron(III) chloride solution. Very limited manual stirring was performed to ensure that the two chemicals were properly mixed. The formation of iron(III) hydroxide occurred spontaneously within a couple of minutes. The suspensions were now ready for use, although some batches were allowed to settle for 20min so that clear water could be pumped off from the top of the tank. This resulted in the removal of some 100 litres per batch, thus reducing the water content of the suspension to approximately 63-65%.

Prior to the simultaneous contacting and drying step, the olivine sand was fed to the combined mixer/dryer. Heated air was introduced to the camber and the mixer was started. The air was heated using electrical heating elements, and the resulting air temperature was kept at 240°C.

The iron(III) hydroxide suspension was then pumped into the combined mixer/dryer using a displacement pump that delivered approximately 20kg per min. The iron(III) hydroxide suspension was added in a varying number of equal portions. After each addition, the relative humidity of the exhaust leaving the combined mixer/dryer rose to 23-53% depending on the amount of suspension added. The mixture was then dried until the humidity was reduced to a predetermined level (usually 20%) and a new portion of iron(III) hydroxide suspension was pumped into the drying chamber. This was repeated until the desired amount of iron(III) hydroxide suspension had been added. Some batches were produced by adding the full amount of suspension, thus resulting in a theoretical weight ratio of iron(III) (in the coating) to support material of 0.0775, whereas a reduced amount of suspension was used in the production of other batches. After the desired total amount had been added, the mixture was dried until the relative humidity of the exhaust reached a predetermined level (usually 20%) and a sample was retrieved. The material was then dried to 0-2% relative humidity. The final product was discharged from the combined mixer/dryer and allowed to cool down. Table 2 summarizes the experimental settings and conditions during the production of 6 different IOCO modifications.

**Table 2. Example of results obtained from the production of various IOCO modifications along with the corresponding experimental parameters.**

| Experimental parameters | IOCO modifications | | | | |
|---|---|---|---|---|---|
| | B2 | B3A | B3B | B4 | B6 |
| Set point for heated air (°C) | 240 | 240 | 240 | 240 | 240 |
| Batch weight of AFS30 (kg) | 750 | 500 | 500 | 500 | 500 |
| Initial weight of suspension (kg) | 875 | 606 | 606 | 606 | 611 |
| Weight of water removed by settling/pumping (kg) | 0 | 94 | 94 | 0 | 110 |
| Resulting weight of suspension (kg) | 875 | 512 | 512 | 606 | 501 |
| Resulting water content of suspension (%) | 70 | 64 | 64 | 70 | 63 |
| Maximum total weight of suspension added (kg) | 700 | 500 | 500 | 600 | 250 |
| Mass ratio between Fe(III) added and support material | 0.06 | 0.08 | 0.08 | 0.08 | 0.04 |
| Number of additions | 7 | 10 | 10 | 20 | 10 |
| Rel. humid. of exhaust when sample was retrieved (%) | 2 | 20 | 2 | 2 | 0 |
| Product temperature (°C) | 77 | 92 | 106 | 95 | 150 |
| Total drying time (min) | 190 | 120 | 133 | 156 | 82 |
| Total energy consumption (kWh) | 469 | - | 352 | 399 | 228 |

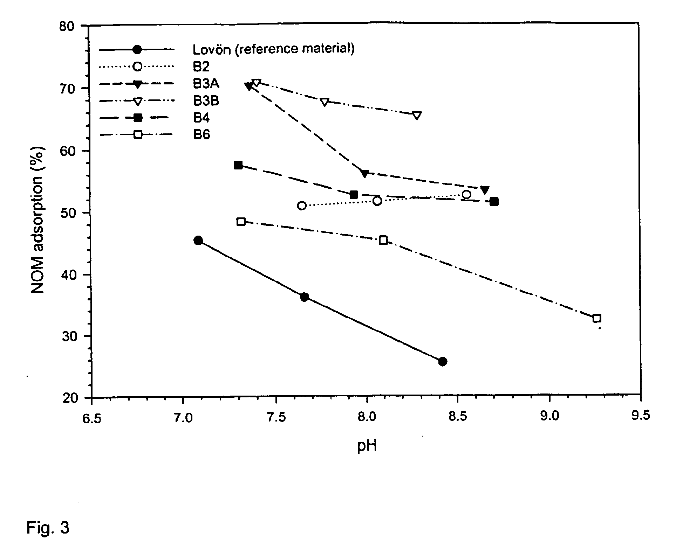

The quality of an IOCO product depends upon two different factors. Firstly, the material must be able to adsorb a significant amount of organic carbon even under near neutral pH conditions. Secondly, the iron(III) oxide coating must be mechanically stable and adhere firmly to the surface of the support material. Since a loss of coating would produce a reduction in the material's ability to adsorb organic carbon, the material could be tested by first exposing it to gentle mechanical abrasion prior to performing an adsorption test. Consequently, the quality of each different IOCO modifications was tested by first shaking and rinsing the samples with distilled water over a 0.200mm sieve. The material was then allowed to dry in room temperature before 0.60g of the sample was placed in a 30ml HDPE test tube. 30ml of test solution was then added to the test tube. The test solution, containing 10.3mg/l of total organic carbon (TOC), consisted of untreated drinking water from the water treatment plant at Lovön near Stockholm in Sweden. The test tube was sealed and then gently agitated for 48 hours at 8°C. Following the agitation period a sample of the solution was obtained using a syringe and a sterile 0.45µm syringe filter. The pH of the solution was measured and the TOC concentration of the filtered sample was determined. For each IOCO modification several test were performed in which the pH of the solution was varied using small additions of strong acid or base. Figure 3 gives test results for the 6 modifications presented in Table 2, as well as for a reference material (named Lovön) which was produced according to US patent 5,911,882 and the procedure given by Jonsson (2003).

### References:

Benjamin, M.M., Chang, Y. & McMeen, C.R. 1999. Removing contaminants from water using iron oxide coated mineral having olivine structure. United States Patent 5,911,882
Chang, Y., Li, C.W. & Benjamin, M.M. 1997. Iron oxide-coated media for NOM sorption and particulate filtration. Journal AWWA 89 (5), 100-113
McMeen, C.R. & Benjamin, M.M. 1997. NOM removal by slow sand filtration through iron oxide-coated olivine. Journal AWWA 89 (2), 57-71
Li, C.W. 1993. Removal of Natural Organic Matter and Particles Using Iron-Oxide-Coated-Olivine. Masters Thesis. University of Washington, Seattle. 79pp
Jonsson, E. 2003. Removal of Aquatic Natural Organic Matter by Iron Oxide Coated Olivine. Licentiate Thesis. Swedish University of Agricultural Sciences. Uppsala, Sweden. ISSN 1100-4525, ISBN 91-576-6562-1

## Claims

1. Process for preparing a coated particulate support material **characterized in that** it comprises:
(a) preparing an iron(III)hydroxide suspension;
(b) filling the support material into a combined mixer/dryer;
(c) adding the iron(III)hydroxide suspension to the mixer/dryer with the support material at a controlled rate, in a stepwise or continuous manner, with simultaneous mixing and drying of the resulting mixture;
the drying being achieved by hot air through the mixer/dryer;
to provide a stable coating which will not be washed off when rinsed with water.

2. Process according to claim 1, **characterized in that** the coated particulate material is at least one of iron(III) oxide coated sand and iron(III)hydroxide coated sand.

3. Process according to claim 1, **characterized in that** the particulate support material is at least one of: silicate, an oxide material, carbonate, hydroxide and polymer.

4. Process according to claim 3, **characterized in that** the particulate support material is at least one of olivine, serpentine and pyroxene.

5. Process according to claim 1, **characterized in that** the iron(III)hydroxide suspension is gradually mixed with the support material.

6. Process according to claim 1, **characterized in that** the ratio iron(III) : support material is in the range of 0,02 - 0,2.

7. Process according to claim 1, **characterized in that** the product temperature is 40 - 250 °C.

## Patentansprüche

1. Verfahren zur Herstellung eines beschichteten partikulären Trägermaterials, **dadurch gekennzeichnet, dass** es umfasst:
(a) Herstellen einer Eisen(III)hydroxid-Suspension;
(b) Einfüllen des Trägermaterials in einen kombinierten Mischer/Trockner;
(c) Hinzufügen der Eisen(III)hydroxid-Suspension in den Mischer/Trockner mit dem Trägermaterial mit einer kontrollierten Geschwindigkeit, in einer schrittweisen oder durchgehenden Weise, mit simultanem Mischen und Trocknen des resultierenden Gemisches;
wobei das Trocknen durch heiße Luft durch den Mischer/Trockner erreicht wird;
um eine stabile Beschichtung bereitzustellen, welche nicht abgewaschen wird, wenn sie mit Wasser gespült wird.

2. Verfahren gemäß Anspruch 1, **dadurch gekennzeichnet, dass** das beschichtete partikuläre Material mindestens eines von mit Eisen(III)oxid beschichtetem Sand und von mit Eisen(III)hydroxid beschichtetem Sand ist.

3. Verfahren gemäß Anspruch 1, **dadurch gekennzeichnet, dass** das partikuläre Trägermaterial mindestens eines ist von: Silikat, ein Oxidmaterial, Carbonat, Hydroxid und Polymer.

4. Verfahren gemäß Anspruch 3, **dadurch gekennzeichnet, dass** das partikuläre Material mindestens eines von Olivin, Serpentin und Pyroxen ist.

5. Verfahren gemäß Anspruch 1, **dadurch gekennzeichnet, dass** die Eisen(III)hydroxid-Suspension schrittweise mit dem Trägermaterial gemischt wird.

6. Verfahren gemäß Anspruch 1, **dadurch gekennzeichnet, dass** das Verhältnis Eisen(III) zu dem Trägermaterial in dem Bereich von 0,02 bis 0,2 liegt.

7. Verfahren gemäß Anspruch 1, **dadurch gekennzeichnet, dass** die Produkttemperatur 40bis 250 °C ist.

## Revendications

1. Procédé pour préparer un matériau support particulaire revêtu, **caractérisé en ce qu'**il comprend :
(a) la préparation d'une suspension d'hydroxyde de fer (III) ;
(b) l'introduction du matériau support dans un mélangeur/ sécheur combiné ;
(c) l'addition de la suspension d'hydroxyde de fer (III) au mélangeur/sécheur avec le matériau support à une vitesse contrôlée, de manière discontinue ou continue, avec mélange et séchage simultanés du mélange résultant ;
le séchage étant réalisé par de l'air chaud traversant le mélangeur/sécheur ;
pour produire un revêtement stable qui n'est pas éliminé par lavage lors d'un rinçage à l'eau.

2. Procédé selon la revendication 1, **caractérisé en ce que** le matériau particulaire revêtu est au moins un matériau parmi le sable revêtu d'oxyde de fer (III) et le sable revêtu d'hydroxyde de fer (III).

3. Procédé selon la revendication 1, **caractérisé en ce que** le matériau support particulaire est au moins un matériau parmi : un silicate, un matériau de type oxyde, un carbonate, un hydroxyde et un polymère.

4. Procédé selon la revendication 3, **caractérisé en ce que** le matériau support particulaire est au moins un matériau parmi l'olivine, la serpentine et le pyroxène.

5. Procédé selon la revendication 1, **caractérisé en ce que** la suspension d'hydroxyde de fer (III) est mélangée progressivement avec le matériau support.

6. Procédé selon la revendication 1, **caractérisé en ce que** le rapport fer (III) : matériau support est dans la plage de 0,02-0,2.

7. Procédé selon la revendication 1, **caractérisé en ce que** la température du produit est 40-250°C.
